# EUROPÄISCHE PATENTANMELDUNG

(11) **EP 0 765 608 A2**
(43) Veröffentlichungstag der Anmeldung: **02.04.1997**
(21) Anmeldenummer: 96115115.6
(22) Anmeldetag: 20.09.1996
(51) Int. Cl.: A23L 1/03

(54) **Verfahren zur Konfektionierung von Lebensmitteln unter verwendung von Polyglycerin**

(30) Priorität: 29.09.1995 DE 19536338
(71) Anmelder: Solvay Alkali GmbH, D-30173 Hannover (DE)
(72) Erfinder: Battermann, Winfried, 30851 Langenhagen (DE); Dilla, Wolfgang, Dr., 47495 Rheinberg (DE); Dillenburg, Helmut, Dr., 47495 Rheinberg (DE)
(74) Vertreter: Lauer, Dieter, Dr.

(57) **Zusammenfassung**

Die Erfindung betrifft die Verwendung von Polyglycerinen bei der Konfektionierung von Lebensmitteln, insbesondere zur Beeinflussung der Texturbildung, des Wasserbindevermögens, der Frische, der Kristallisationshemmung, der Proteindenaturierung sowie der Verbesserung der Gefrier- und Auftaustabilität und zur Fettsubstitution.

## Beschreibung

Die Erfindung betrifft ein Verfahren und die Verwendung von Polyglycerinen zur Konfektionierung von Lebensmitteln.

Die Anwendung von Polyglycerinfettsäureestern zur Konfektionierung in der Lebensmittelindustrie ist bekannt. Polyglycerinfettsäureester werden aufgrund ihrer Eigenschaften auch als Emulgatoren zur Lebensmittelkonfektionierung eingesetzt.

Im Ergebnis ernährungsphysiologischer Untersuchungen wurde festgestellt, daß die Polyglycerinfettsäureester gut verträglich sind, enzymatisch gespalten werden und die Fettsäuren im Stoffwechsel kalorisch verwertet werden.

Es ist ebenfalls bekannt, daß Polyglycerine im menschlichen Körper nicht katabolisiert werden, sondern unverändert ausgeschieden werden. Konkrete Hinweise über die Eignung der Polyglycerine als Konfektionierungsmittel für Lebensmittel findet man jedoch nicht.

Im Vergleich mit Fetten weisen Polyglycerine ab dem Triglycerin das typische fettige mouth-Feeling auf.

Die Aufgabe der Erfindung bestand darin, die Konfektionierung der Lebensmittel durch Zusatz von Additiven mit interessanten funktionellen Eigenschaften, mit denen Lebensmittel sensorisch und technologisch beeinflußt werden können, zu bereichern.

Es wurde gefunden, daß Polyglycerine als funktionelles Additiv zur Konfektionierung von Lebensmitteln eingesetzt werden können.

Als Polyglycerine im Sinne der Erfindung sind Diglycerin, Triglycerin, Tetraglycerin, Pentaglycerin, Hexaglycerin sowie höhere Oligomere des Glycerins zu verstehen.

Diese Polyglycerine können sowohl lineare, verzweigte als auch cyclische Verbindungen sein. Sie können sowohl allein als auch im Gemisch miteinander und/oder untereinander verwendet werden.

Auf Grund ihrer Eigenschaften insbesondere im Hinblick auf den Stoffwechsel sind die Polyglycerine insbesondere als Fettersatzstoffe anzusehen.

Erfindungsgemäß werden die Polyglycerine als Additiv in das Lebensmittel bzw. als Rezepturbestandteil eingetragen. Das Additiv kann je nach Anwendungsform in Mengen von 1 bis 50 Gew.-% zugesetzt werden, ohne daß negative geschmackliche Beeinträchtigungen spürbar werden.

Es ist möglich, die Additive in Form von Injektionen, z. B. bei Fisch oder Fleisch einzutragen, ein einfaches Zudosieren in die entsprechende Rezepturmischung ist ebenfalls möglich, z. B. in Fondantmischung, in Muffinmischungen, in Käserezepturen, Speiseeis, Brotaufstriche, Lebkuchen oder backfähige Fruchtpasten.

In einer bevorzugten Ausführungsform werden Diglycerin (DGLC), Triglycerin (TGLC), Polyglycerin (PGLC) bzw. Polyglycerin mit einem erhöhten Anteil an Tetraglycerin (PGLCT) verwendet.

In einer bevorzugten Ausführungsform wird als Diglycerin ein Produkt mit einem Diglyceringehalt von min. 900 g/kg, als Triglycerin ein Produkt mit einem Triglyceringehalt von min. 800 g/kg und als Polyglycerin insbesondere ein Produkt mit einem Gehalt an

| | |
|---|---|
| Diglycerin | 150 bis 300 g/kg |
| Triglycerin | 350 bis 550 g/kg |
| Tetraglycerin | 100 bis 250 g/kg |
| Pentaglycerin und höhere Oligomere | max. 150 g/kg |

oder ein Produkt mit einem Gehalt an

| | |
|---|---|
| Di-, Tri- und Pentaglycerin | max. 500 g/kg |
| Tetraglycerin | min. 400 g/kg |
| Hexa-, Hepta-, Octaglycerin | max. 200 g/kg |

verwendet.

In einer anderen bevorzugten Ausführungsform enthält das erfindungsgemäß eingesetzte Additiv neben Diglycerin (ca. 15 bis 30 Gew.-%) vor allem die höherkondensierten Oligomere des Glycerins, wie Triglycerin (ca. 35 bis 55 Gew.-%), Tetraglycerin (ca. 10 bis 25 Gew.-%) und Pentaglycerin (maximal 10 Gew.-%). Höhere Oligomere wie Hexaglycerin und Heptaglycerin sind nur in geringem Umfang, cyclisches Diglycerin, Triglycerin und Tetraglycerin sind kaum vorhanden.

In einer anderen ebenfalls bevorzugten Ausführungsform enthält das erfindungsgemäß eingesetzte Polyglycerin vor allem die höherkondensierten Oligomere des Glycerins wie Triglycerin (ca. 15 Gew.-%), Tetraglycerin (mindestens 40 Gew.-%) und Pentaglycerin (ca. 20 Gew.-%), wobei der Anteil an Diglycerin, Triglycerin und Pentaglycerin von 50 Gew.-% nicht überschritten wird. Höhere Oligomere wie Hexaglycerin und Heptaglycerin sowie cyclisches Diglycerin, Triglycerin und Tetraglycerin sind nur in geringer Menge vorhanden.

Die Polyglycerine werden z. B. industriell durch thermische oder katalytische Kondensation von Glycerin oder durch Hydrolyse von Epichlorhydrin hergestellt.

Es wurde gefunden, daß die erfindungsgemäß eingesetzten Produkte geeignet sind, insbesondere
Texturbildung
Wasserbindungsvermögen
Frischhaltung
Kristallisationshemmung
Proteindenaturierung
Gefrier- und Auftaustabilität
zu beeinflussen.

Es wurde weiterhin gefunden, daß Polyglycerine ab dem Triglycerin als Fettersatzstoffe eingesetzt werden können.

In einer Ausführungsform wurden Kochschinken, Fisch, Eiscreme, Imitationskäse, Frischkäse, Lebkuchen, Muffins, Fruchtpasten, Fondant, Brotaufstrich mit den erfindungsgemäßen Additiven konfektioniert.

Der Einsatz der erfindungsgemäßen Additive für andere Lebensmittel ist ebenfalls denkbar.

Im Vergleich mit den traditionellen Additiven stellen die erfindungsgemäßen Additive keine einfachen Substitute dar, sondern sind eine Bereicherung der Konfektionierungsmittelpalette.

Limitierend für die Anwendung und Dosierung kann der Süßgeschmack der Polyglycerine sein. Es wurde gefunden, daß die Konfektionierung von Fisch bzw. Kochschinken mit Polyglycerinen möglich ist, ohne daß ein nicht gewünschter Süßgeschmack spürbar wird, wenn die Zugabe von 3 Gew.-% eingehalten wird.

Erfindungsgemäß wurde Kochschinken mit einer polyglycerinhaltigen Spritzlake behandelt. Die Konzentration an Polyglycerin in der Spritzlake wurde so gewählt, daß der Kochschinken in der verzehrfähigen Form 1 bis 8 Gew.-% Polyglycerin enthielt.

Zur Konfektionierung von Fisch wurde das Fischfleisch mit einer Lake behandelt, die soviel Polyglycerin enthielt, daß im Fischfleisch nach der Behandlung 0,5 bis 5 Gew.-% Polyglycerin enthalten waren.

Durch Zusatz von Polyglycerinen kann insbesondere das Wasserbindevermögen (a_{w}-Wertsenkung) verbessert werden. Mit der weitgehenden Bindung des freien Wassers im Lebensmittel wird das Schimmel- und Hefewachstum gehemmt und somit werden die Lebensmittel länger frisch und verzehrfähig gehalten.

Es ist bekannt, daß insbesondere bei der Lagerung von Eiscreme Schwankungen in der Lagertemperatur auftreten, die dazu führen, daß sich die Struktur der Eiscreme verändert. Durch Zusatz von Polyglycerinen wird die Nachkristallisation von Lactose in der Eiscreme so beeinflußt, daß die für den Verbraucher unangenehme Sandigkeit nicht mehr auftritt. Erfindungsgemäß werden der Eismischung 1 bis 10 Gew.-% Polyglycerin, bezogen auf die Eismasse, zugemischt.

Bei der Herstellung von Süßwaren, z. B. Fondant, wurde durch Zusatz von Polyglycerinen die Knetbarkeit der zu verformenden Masse wesentlich verbessert. Eine Rekristallisation des Zuckers konnte nicht festgestellt werden. Erfindungsgemäß werden der Fondantmasse 1 bis 6 Gew.-% Polyglycerin, bezogen auf die Fertigmasse, zugemischt.

Ein bevorzugtes Anwendungsgebiet ist die Konfektionierung von Fisch. Es wurde gefunden, daß die starke Proteindenaturierung nach dem Dämpfen und der folgenden thermischen Sterilisation des Fischfleisches durch Zusatz von Polyglycerinen sehr stark vermindert wird. Es wurde festgestellt, daß das Fischfleisch nicht den unangenehmen strohigen Geschmack bekommt. Es war außerdem überraschend, daß der zu erwartende Süßgeschmack der Polyglycerine nicht geschmacksbeeinträchtigend wirkt, wenn der Polyglyceringehalt im Fischfleisch weniger als 5 Gew.-% beträgt.

In einer Ausführungsform wird das Polyglycerin in den Fischmuskel injiziert. Andere Technologien sind jedoch auch denkbar und möglich. So kann z. B. der fangfrische Fisch oder der filettierte Fisch vor dem Blockfrosten in polyglycerinhaltige Bäder getaucht werden. Das Tauchverfahren ist ein Fischfleisch schonendes Verfahren und daher besonders zur Konfektionierung von Fischfilets geeignet.

In einer anderen Ausführungsform wurde Kochschinken mit den erfindungsgemäßen Additiven behandelt. Es wurde gefunden, daß das Volumen des erfindungsgemäß präparierten Kochschinkens vergrößert werden kann. Volumenzunahmen um ca. 5 bis 60 % sind ohne Geschmacksbeeinträchtigungen möglich. Zur Erzielung der hohen Volumenzunahme von z. B. 60 % ist ein Massenverhältnis zwischen Polyglycerin und pflanzlichen Protein oder Protein aus der Milch oder Gemischen daraus von 5 : 1 oder 5 : 0,5 zu wählen. Selbst nach 6-wöchiger Lagerzeit konnte keine Fleischsaftseparierung festgestellt werden.

Bei der Herstellung von Kuchen und Gebäck wird z. B. durch die Zugabe der erfindungsgemäßen Additive die Hefe- und Schimmelbildung verlangsamt, aufgrund der Bindung des freien Wassers. Dieses gebundene Wasser im Gebäck steht dann nicht mehr für die Stoffwechsel der Hefen und Schimmelpilze zur Verfügung. Erfindungsgemäß wurde zur Herstellung von Rührkuchen, insbesondere zur Herstellung von Muffins, der Teigmischung 2 bis 15 Gew.-% Polyglycerin, bezogen auf die Teigmasse, zugemischt.

Mit der Ausnutzung der maximalen Polyglycerinmenge kann das verwendete Butterfett weitgehend ausgetauscht werden, um hierdurch ein fettreduziertes Nahrungsmittel zu erhalten. Die niedrigen Dosiserungen von 2 Gew.-% führen bereits zu einer a_{w}-Wertsenkung.

Es wurde weiterhin gefunden, daß bei Lebkuchen, die in der Kuchenmischung maximal 5 Gew.-% Polyglycerin enthielten, eine Gebäckalterung in verzögerter Form auftritt. Durch die verzögerte Gebäckalterung bleibt die gewünschte weiche Textur in Verbindung mit den Kaueigenschaften weitgehend stabil über die gesamte Periode der Verzehrfähigkeit.

In einer weiteren Ausführungsform der Erfindung wurde backfähigen Fruchtpasten maximal 5 Gew.-% Polyglycerin, bezogen auf die Fruchtpaste, zugemischt. Fruchtpasten im Sinne der Erfindung sind Obsterzeugnisse aus mindestens 30 % frischem Obst, Stärke und anderen Hydrokolloiden. Der erfindungsgemäße Zusatz von Polyglycerinen bewirkt eine a_{w}-Wertsenkung und damit eine Verzögerung der Schimmel- und Hefenbildung.

In einer weiteren Ausführungsform wurde zur Herstellung von Imitationskäse der Käsemasse erfindungsgemäß 1 bis 15 Gew.-% Polyglycerin, bezogen auf die Käsemasse, zugemischt.

Mit der Ausnutzung der maximalen Polyglycerinmenge kann das verwendete Butterfett weitgehend ausgetauscht werden, um somit ein fettreduziertes Nahrungsmittel zu erhalten.

In einer anderen Ausführungsform wurde zur Herstellung von Frischkäse der Käsemasse 1 bis 10 Gew.-% Polyglycerin, bezogen auf die Käsemasse, zugemischt.

In Abhängigkeit von der Polyglycerindosierung konnte der Neigung zur Molkenseparation über die Zeit der Verzehrfähigkeit bei der Aufbewahrung des Frischkäses im Kühlschrank entgegengewirkt werden. Der Polyglycerinzusatz vermittelt dem Frischkäse eine cremigere Struktur, wodurch eine wesentlich bessere Streichfähigkeit erzielt wird.

Durch Zusatz der erfindungsgemäßen Additive bei der Herstellung von Brotaufstrich kann z. B. der Fettgehalt reduziert werden.

So wurden in einer Ausführungsform einer Mischung zur Herstellung von Margarine maximal 30 Gew.-% Polyglycerin, bezogen auf die Margarinemischung, zugemischt.

Die Herstellung von Brotaufstrichen anderer Art ist ebenfalls möglich und durch Zusatz von maximal 50 Gew.-% Polyglycerin, bezogen auf die Brotaufstrichmasse, kann der Brennwert ebenfalls reduziert werden.

Die nachfolgenden Beispiele sollen die Erfindung erläutern jedoch nicht einschränken.

### Es wurden folgende Synonyme verwendet

- DGLC: Diglycerin
- TGLC: Triglycerin
- PGLC: Polyglycerin
- PGLCT: Polyglycerin mit erhöhtem Tetraglycerinanteil

### Beispiel 1:

### Konfektionierung von Heringsfilet

### Verwendete Spritzlake:

| | | |
|---|---|---|
| 1. | PGLC | 10 % |
| | Wasser | 90 % |
| 2. | TGLC | 10 % |
| | Wasser | 90 % |
| 3. | PGLCT | 10 % |
| | Wasser | 90 % |
| 4. | PGLC | 7,5 % |
| | Molkenproteinkonzentrat (WPT) | 2,5 % |
| | Wasser | 90 % |

In 5 kg Heringsfilets wurden mit einem Multinadelsystem 1 kg Spritzlake injiziert.

| | |
|---|---|
| Tumbler-Einstellung | 5 Upm/0,95 bar |
| Tumblingzeit | 5 min + 5 min |
| Gefriertemperatur | - 22 °C. |

### Beispiel 2:

### Konfektionierung von Kabeljaufilet

Analog Beispiel 1 wurde in 3 kg Kabeljaufilet Spritzlake injiziert.

Die Ablaufverluste von Heringsfilets und Kabeljaufilets wurden jeweils nach 2 bzw. 84 Tagen Lagerung gemessen. Ergebnisse siehe Tabelle 1 und 2.

Die Ergebnisse zeigen, daß mit der Zugabe von Polyglycerin eine verbesserte Gefrier- und Auftaustabilität zu erreichen ist. Die vom Gefrierprozeß ausgehende Teilzerstörung der Zellen durch Eiskristalle, verbunden mit dem Auslaufen des Gewebswassers wird reduziert.

### Beispiel 3:

### Heringsfilets, sterilisiert

### Fischsauce-Rezeptur:

| | Gew.-% |
|---|---|
| Stärke, Calfo | 4,0 |
| Mehl, Type 505 | 3,0 |
| Zucker | 11,0 |
| Salz | 6,5 |
| Fondor | 5,0 |
| Sojaöl | 10,0 |
| modifiziertes Molkenproteinkonzentrat WPT | 0,8 |
| Dickungsmittel-Xanthan | 2,0 |
| Gewürzessig 7%ig | 2,0 |
| Wasser | 55,7 |

In das vorgelegte Wasser werden die pulverigen Mischungsbestandteile unter langsamen Rühren eingearbeitet, danach das Öl langsam hinzugefügt und die Mischung in einer Silverson Emulgiermaschine emulgiert. Nach Zugabe des Gewürzessigs wird die Soße noch einmal ca. 2 Minuten emulgiert.

Die gemäß Beispiel 1 präparierten Heringsfilets (je 100 g) und 100 g Soße wurden in 200 g-Dosen bei 118 °C, 30 Minuten in einem Standautoklaven sterilisiert.

Nach 14 Tagen wurde der Fisch sensorisch beurteilt.

Die Heringsfilets mit den Polyglycerinadditiven waren wesentlich saftiger und hinterließen einen besseren Kaueindruck als die Nullprobe und die Probe mit dem Molkenproteinkonzentrat.

### Beispiel 4:

### Kochschinken

### Spritzlake:

| | Gew.-% |
|---|---|
| Wasser | 82,6 |
| Nitritpökelsalz | 5,3 |
| Milchzucker (Variolac 90) | 1,3 |
| Phosphat (STP) | 1,1 |
| Na-ascorbat | 0,1 |
| Molkenprotein HA-7570 | 1,6 |
| Polyglycerin | 8,0 |

Mit dem Multinadelinjektor wurde die auf 5 °C gekühlte Lake in den Schinken eingebracht.

Vor dem Tumbeln wurde das Fleisch mit einem Tenderizer-Messersystem behandelt, zur besseren Aufnahme der Lake.

Das Fleisch wurde in den Tumbler gelegt und der Rest der Spritzlake für eine Volumenzunahme von 60 % hinzugefügt.

Das Fleisch wurde bei 12 Upm unter Vakuum (0,95 bar) 12 Stunden getumbled. Das präparierte Fleisch wurde danach in Formen im Kochschrank bei 72 °C gekocht bis die Kerntemperatur von 68 °C erreicht war, anschließend gekühlt, in Polypropylenbeutel unter Vakuum eingeschweißt und bei 5 °C gelagert.

3 Tage nach der Herstellung wurde das Fleisch sensorisch beurteilt.

Der Kochschinken zeigte in allen Fällen eine trockene Oberfläche und somit keine Absonderung von Fleischsaft.

Dieses gute sensorische Ergebnis wurde auch nach 6-wöchiger Lagerung bei 4 °C bestätigt.

Die Texturparameter (Elastizität, Bindekraft, Klebkraft und Festigkeit) des Fleisches bzw. des Kochschinkens wurden durch den Zusatz der Polyglycerine nicht verändert.

### Beispiel 5:

### Imitationskäse mit 21 % Fett

| **Rezeptur** | **0-Probe Gew.-%** | **PGLC/50 %iger Butteraustausch Gew.-% (erfindungsgemäß)** |
|---|---|---|
| Ca-Caseinat | 26,0 | 26,0 |
| Butter | 26,0 (21 abs.) | 13,0 (10,6 abs.) |
| Schmelzsalze (Phosphatmix) | 1,6 | 1,6 |
| Salz | 0,8 | 0,8 |
| Wasser | 45,6 | 45,6 (davon ca. 10 % Kondensat) |
| PGLC | - | 13,0 |
| Milchsäure 3 %ig zur pH-Einstellung | 0,8 ml | 1,3 ml |

Die Rezepturbestandteile wurden zunächst in einem Stephan-Kutter mit Direktdampfeintrag vermischt und danach bei 80 Upm 2 Min. auf 82 °C erhitzt. Nach der pH-Wert-Einstellung mit 3 %iger Milchsäure wird die Mischung noch einmal 2 Minuten bei 80 Upm auf 82 °C erhitzt. Die heiße Mischung wird in Behälter abgefüllt und bei 4 bis 8 °C 12 Stunden gelagert und danach sensorisch beurteilt.

Der Polyglycerinzusatz bewirkt eine deutliche Viskositätsreduzierung, was sich positiv auf den Abfüllprozeß auswirkt.

Der Polyglycerin-Zusatz beeinflußt positiv die Plastizität des Käseteiges und bewirkt eine bessere Cremigkeit gegenüber der 0-Probe.

In einer bevorzugten Ausführungsform wurde der Salzgehalt etwas erhöht und der Fettaustausch auf maximal 25 % (rel.) begrenzt, was sich nicht nachteilig auf die Käsequalität auswirkt.

Der Süßgeschmack der Polyglycerine limitiert den maximalen Fettaustausch.

### Beispiel 6:

### Frischkäse

| **Rezeptur** | **0-Probe Gew.-%** | **Probe (erfindungsgemäß) Gew.-%** |
|---|---|---|
| Magermilchquark (18 % TS) | 77,3 | 82,0 |
| Sahne (40 % Fett, 48 % TS) | 15 (6 abs.) | 6,0 (2,4 abs.) |
| Proteinblend (Nutrilac QU 7560) | 7 | 5,3 |
| Salz | 0,7 | 0,7 |
| PGLC | - | 6,0 |

Die Rezepturbestandteile werden in einem Stephan-Kutter mit Direktdampfeintrag bei 50 °C und einem pH-Wert von 4,8 bis 4,9 gemischt und durch Direkterhitzung bis 85 °C pasteurisiert. Danach wird die Mischung unter Rühren auf 65 bis 70 °C gekühlt. Die Homogenisierung der Käsemasse erfolgt bei 300 bar. Danach wird die Käsemasse in Behälter (à 250 g) gefüllt und schnell auf eine Temperatur unter 10 °C gekühlt und bei 4 bis 8 °C gelagert. Nach 24 Stunden erfolgte die sensorische Beurteilung.

Die Textur des Frischkäses mit Polyglycerinzusatz war deutlich cremiger als die der 0-Probe. Die leichte Süßnote gab dem Frischkäse eine vollere Geschmacksnote.

Es war auch nach einer Lagerung von 4 Wochen keine sichtbare Molkenseparation festzustellen. Die Textur behielt den cremigen Charakter.

### Beispiel 7:

### Lebkuchen

### Zutaten des Lebkuchenmixes (Fa. Martin Braun):

Weizenmehl
brauner Zucker
Roggenmehl
Zucker
Gewürzmischung
ABC Backtriebmittel
Verdickungsmittel (Guarmehl)
Molkenpulver
Weizenfaser

| **Rezeptur** | **0-Probe Gew.-%** | **Proben (erfindungsgemäß) Gew.-%** |
|---|---|---|
| Lebkuchenmix | 44,6 | 44,6 |
| Weizenmehl Typ 505 | 22,3 | 22,3 |
| Honig | 22,0 | 20,0 |
| Wasser | 11,1 | 11,1 |
| PGLC | -- | 2 |

### Eingesetztes PGLC:

| | |
|---|---|
| Diglycerin | (2-P) |
| Triglycerin | (3-P) |
| Polyglycerin | (4-P) |
| Polyglycerin T | (5-P) |

Die Rezepturbestandteile wurden innig vermischt und geknetet, anschließend läßt man den Teig 24 Stunden bei 4 bis 8 °C ruhen. Danach wird er auf eine Teigstärke von 5 mm ausgerollt, geformt und im Umluftofen bei 200 °C 5 Min. gebacken. Nach dem Abkühlen auf Raumtemperatur wurden die Lebkuchen in Glaspapier verpackt und bei 17 bis 20 °C gelagert.

Eine Gebäckalterung konnte nach 42 Tagen Lagerzeit nicht festgestellt werden.

Der Zusatz der erfindungsgemäßen Additive bewirkt eine a_{w}-Wertsenkung gegenüber der O-Probe im befriedigenden Rahmen, eine Retrogradation der Stärke konnte nicht festgestellt werden.

### (a_{w}-Werte):

| **Proben** | **nach 3 Tagen** | **nach 42 Tagen** |
|---|---|---|
| 0-Probe | 0,72 | 0,70 |
| 2-P (DGLC) | 0,59 | 0,59 |
| 3-P (TGLC) | 0,58 | 0,58 |
| 4-P (PGLC) | 0,56 | 0,56 |
| 5-P (PGLCT) | 0,56 | 0,57 |

Nach 42 Tagen konnte auf den Proben mit Additivzusatz im Gegensatz zur O-Probe, kein sichtbarer Schimmelbefall festgestellt werden.

### Beispiel 8:

### Rührmasse Typ Muffins

| **Rezeptur Angaben in Gew.-%** | **0-P** | **2-P** | **3-P** | **4-P** | **5-P** | **6-P** |
|---|---|---|---|---|---|---|
| Mehl Tpye 505 | 15,0 | 15,0 | 15,0 | 15,0 | 15,0 | 15,0 |
| Margarine | 21,0 | 10,5 | 10,5 | 10,5 | 10,5 | 10,5 |
| Weizenstärke | 15,0 | 15,0 | 15,0 | 15,0 | 15,0 | 15,0 |
| Zucker | 24,0 | 17,0 | 17,0 | 17,0 | 17,0 | 17,0 |
| Vollei | 21,0 | 21,0 | 21,0 | 21,0 | 21,0 | 21,0 |
| Wasser | 3,0 | 3,0 | 3,0 | 3,0 | 3,0 | 3,0 |
| Emulgator ME 8310 | - | - | - | - | - | 1,0 |
| Salz | 0,4 | 0,4 | 0,4 | 0,4 | 0,4 | 0,4 |
| ABC Triebmittel | 0,6 | 0,6 | 0,6 | 0,6 | 0,6 | 0,6 |
| Dextrose | - | 7,0 | 7,0 | 7,0 | 7,0 | 7,0 |
| Diglycerin | - | 10,5 | - | - | - | - |
| TGLC | - | - | 10,5 | - | - | - |
| PGLCT | - | - | - | 10,5 | - | - |
| PGLC | - | - | - | - | 10,5 | 10,5 |
| | 100 | 100 | 100 | 100 | 100 | 101 |

Die Zutaten wurden vermischt und 5 Minuten im all-in-Verfahren aufgeschlagen, danach wurde die Teigmasse (Einwaage 40 g) in Formen gefüllt und 15 bis 16 Minuten gebacken. Zur Ermittlung der a_{w}-Wert-Entwicklung wurden die Muffins in Glaspapier verpackt und bei 17 bis 20 °C gelagert.

### a_{w}-Wertentwicklung

| **Proben** | **3 Tage** | **42 Tage** |
|---|---|---|
| 0-P | 0,78 | 0,73 |
| 2-P (DGLC) | 0,59 | 0,61 |
| 3-P (TGLC) | 0,59 | 0,60 |
| 4-P (PGLC) | 0,58 | 0,58 |
| 5-P (PGLCT) | 0,57 | 0,60 |

Der Zusatz des erfindungsgemäßen Additivs bewirkt eine deutliche a_{w}-Wertsenkung.

Die Polyglycerine sind in der Lage, über die Backphase hinaus das freie Wasser im Teig zu binden. Das zeigt sich in den Ausbackverlusten. Der Zusatz von Polyglycerinen bewirkt ein Ausbackverlust von 4 bis 6 %, bei der 0-Probe lag dieser Wert bei 9 %. Die Muffins zeichnen sich durch eine längere Frischaltung aus.

42 Tage wurden die Muffins gelagert und beobachtet. Der sichtbare Schimmelbefall setzte bei der 0-Probe 6 Tage früher ein.

### Beispiel 9:

### Halbfett-Margarine

### Rezepturansatz

| **Zutaten** | **0-P [%]** | **1-P Gew.-%** | **2-P Gew.-%** | **3-P Gew.-%** |
|---|---|---|---|---|
| **Wasserphase** | | | | |
| Gelatine 200 bloom | 2,0 | 2,0 | 2,0 | 2,0 |
| K-Sorbat | 0,1 | - | - | - |
| Salz | 0,5 | 0,5 | 0,5 | 0,5 |
| Wasser | 56,9 | 57,0 | 57,0 | 57,0 |
| PGLCT | - | 20,0 | - | - |
| PGLC | - | - | 20,0 | - |
| TGLC | - | - | - | 20,0 |

| **Fettphase** | | | | |
|---|---|---|---|---|
| Fettblend (Polawar E31, Smp 38 °C) | 40,0 | 20,0 | 20,0 | 20,0 |
| Emulgator (Dimodan (P)) | 0,5 | 0,5 | 0,5 | 0,5 |
| pH-Wert | 5,8 | 5,8 | 5,7 | 5,7 |
| pH-Werteinstellung auf Blend | 5,5 | 5,5 | 5,4 | 5,4 |
| Citronensäure 17 %ig | 1,8 | - | - | - |
| Na-Lauge 17 %ig | - | 2,1 | 2,8 | 2,3 |
| **Aromatisierung** | | | | |
| Flavering 7822 Butter nat. 0,05 % | | | | |
| Flavering 2662 Butter nat 0,024 % | | | | |

Zur Herstellung der Margarine wurde die Fettphase auf 42 °C erwärmt und in die 45 °C warme vorgelegte Wasserphase unter langsamem Rühren eingebracht.

Über eine Perfektor-Anlage mit zwei Kühlmesserzylindern und einem Nachknetzylinder wurde die Emulsion gekühlt und strukturiert. die Emulsionsbildung ist in Gegenwart der Polyglycerine problemlos möglich. Es ist möglich, 50 % Fett auszutauschen.

### Beispiel 10:

### Softspeiseeis

| **Zutaten** | **0-P Gew.-%** | **1-P Gew.-%** | **2-P Gew.-%** |
|---|---|---|---|
| Wasser | 47,2 | 50,8 | 54,4 |
| Sahne (TS 48 %, 40 % Fett) | 26,3 | 19,7 | 13,2 |
| Glucose | 4,0 | 4,0 | 4,0 |
| Zucker | 7,0 | 7,0 | 7,0 |
| Lactose (Variolac 95) | 5,0 | 5,0 | 5,0 |
| Protein-Compound (IC-3505) | 4,8 | 4,8 | 4,8 |
| Magermilchpulver | 4,8 | 5,3 | 5,8 |
| Emulgator (5912) | 0,6 | 0,6 | 0,6 |
| Vanille | 0,3 | 0,3 | 0,30 |
| PGLC | - | 2,5 | 5,0 |

Die Zutaten wurden nacheinander unter Rühren in das vorgelegte Wasser eingebracht.

Anschließend wurde die Mischung auf 78 °C zur Pasteurisierung erhitzt und homogenisiert (2-Stufen-Homogenisierung 160/60 bar). Nach der Reifung von 12 h bei 4 °C wurde mit Hilfe des Gel-O-Mat Freezer 100 die Eismasse hergestellt. Die Nachhärtung erfolgte bei -22 °C.

Auch nach einem Temperatur-Intervalltest (-18 °C/24 h, -5 °C/48 h, -18 °C/24 h) über 8 Wochen konnte keine Nachkristallisation von Lactose festgestellt werden.

Der Zusatz von Polyglycerinen erhöht die Viskosität des Eismixes vor dem Freezer. Das verzehrfähige Eis mit Polyglycerinzusatz ist wesentlich softer und hat aufgrund der weicheren Struktur ein besseres Schmelzverhalten und dadurch ein volleres Mundgefühl.

### Beispiel 11:

### Fondantmasse

| **Rezepturansatz** | **0-P Gew.-%** | **1-P Gew.-%** |
|---|---|---|
| PGLC | - | 6,0 |
| Stärkesirup | 9,4 | 3,4 |
| Saccharose Raffinade I | 83,5 | 83,5 |
| Wasser | 27,8 | 27,8 |
| Kochverlust | 20,7 | 19,1 |
| Ausbeute | 100,0 | 101,6 |

Zur Herstellung der Fondantmasse wurde die Saccharose in das Wasser unter Rühren und Temperaturerhöhung auf 45 °C eingetragen. Die Mischung wird mäßig weitergerührt und auf 75 °C erwärmt. Danach wird der Stärkesirup unter gleichzeitiger Erwärmung der Mischung auf 90 °C hinzugefügt. Anschließend wurde das Polyglycerin dosiert. Danach wurde die Temperatur auf 103 °C erhöht und unter Beibehaltung der Temperatur solange gerührt, bis die Fondantmasse klar war.

Die erfindungsgemäße Fondantmasse läßt sich aufgrund der verbesserten Plastizität sehr viel besser ausformen als die 0-Probe. Auch nach einer Lagerzeit von 3 Wochen war der Oberflächenglanz unverändert.

**Tabelle 1**

| Ablaufverlust nach der Lakeninjektion und nach Wiederauftauen "Heringsfilets" | | | | | |
|---|---|---|---|---|---|
| **Polyglycerinhaltige Lake** | **Aufnahme der Lake nach Tumbling Gew.-%** | **Ablauf der Lake vor dem Einfrieren Gew.-%** | **Ablauf der Lake nach Auftauen Lagerzeit: 2 Tage Gew.-%** | | **Ablauf der Lake nach Auftauen Lagerzeit: 84 Tage Gew.-%** |
| | | | **sofort** | **n. 1h** | |
| Wasser (Nullprobe) | 2,1 | 3,6 | 3,0 | 2,8 | 3,5 |
| Polyglycerin T | 3,6 | 1,9 | 2,6 | 2,5 | 2,3 |
| Triglycerin | 2,7 | 2,7 | 2,4 | 1,8 | 2,0 |
| Polyglycerin | 3,5 | 3,5 | 2,4 | 2,2 | 2,5 |
| Polyglycerin + WPT* | 5,0 | 3,0 | 2,3 | 2,5 | 2,5 |

| | | | | | |
|---|---|---|---|---|---|
| *WPT mod. Molkenproteinkonzentrat | | | | | |
| Auftau-Verfahren: gefrorene Filets -22 °C 18 h Kühlraum bei 6 °C 6 h Raumtemperatur bei 20 °C | | | | | |

**Tabelle 2**

| Ablaufverlust nach der Lakeninjektion und nach dem Wiederauftauen "Kabeljaufilets" | | | | | |
|---|---|---|---|---|---|
| **Polyglycerinhaltige Lake** | **Aufnahme der Lake nach Injektion Gew.-%** | **Ablauf der Lake vor dem Einfrieren Gew.-%** | **Ablauf der Lake nach Auftauen Lagerzeit: 2 Tage Gew.-%** | | **Ablauf der Lake nach Auftauen Lagerzeit: 84 Tage Gew.-%** |
| | | | **sofort** | **n. 1 h** | |
| Wasser (Nullprobe | 12,5 | 6,2 | 4,2 | 3,9 | 3,8 |
| Polyglycerin T | 12,9 | 5,3 | 1,2 | 2,6 | 2,7 |
| Triglycerin | 12,3 | 5,2 | 2,3 | 2,9 | 2,4 |
| Polyglycerin | 13,9 | 6,2 | 3,2 | 3,9 | 3,6 |
| Polyglycerin + WPT* | 14,0 | 6,1 | 3,9 | 3,4 | 3,5 |

| | | | | | |
|---|---|---|---|---|---|
| *WPT mod. Molkenproteinkonzentrat | | | | | |
| Auftau-Verfahren: gefrorene Filets -22 °C 18 h Kühlraum bei 6 °C 6 h bei Raumtemperatur von 20 °C | | | | | |

**Tabelle 3**

| Lebensmitteladditive zur Erzielung von Produkteigenschaften | | | |
|---|---|---|---|
| **Polyglycerine** | | | |
| **Lebensmittel** | **gewünschte Produkteigenschaften** | **Polyglycerin Dos. Gew.-%** | **Fettsubstitution Gew.-%** |
| Kochschinken 60 % Volumenzunahme | Synärese-Reduktion Wasserbindung | 1-3 | |
| Fisch | Wasserbindung Texturverbesserung | 1-3 | |
| Imitationskäse 11 % Fett abs. | Texturverbesserung Kalorienreduktion | ≤ 13 | ≤ 50 |
| Frischkäse 2,4 % Fett abs. | Texturverbesserung Kalorienreduktion | ≤ 6 | ≤ 100 |
| Eiscreme 5 % Fett abs. | Kalorienreduktion Vermeidung der Sandigkeit (Nachkristallisation) | ≤ 5 | ≤ 50 |
| Muffins 20 % Fett | Kalorienreduktion verlängerte Frischhaltung | ≤ 10 | ≤ 50 |
| Lebkuchen | verlängerte Frischhaltung | ≤ 2 | |
| Fondant | plastisches Verhalten | ≤ 3 | |
| Halbfettmargarine 40 % Fett | Kalorienreduktion | ≤ 20 | ≤ 50 |

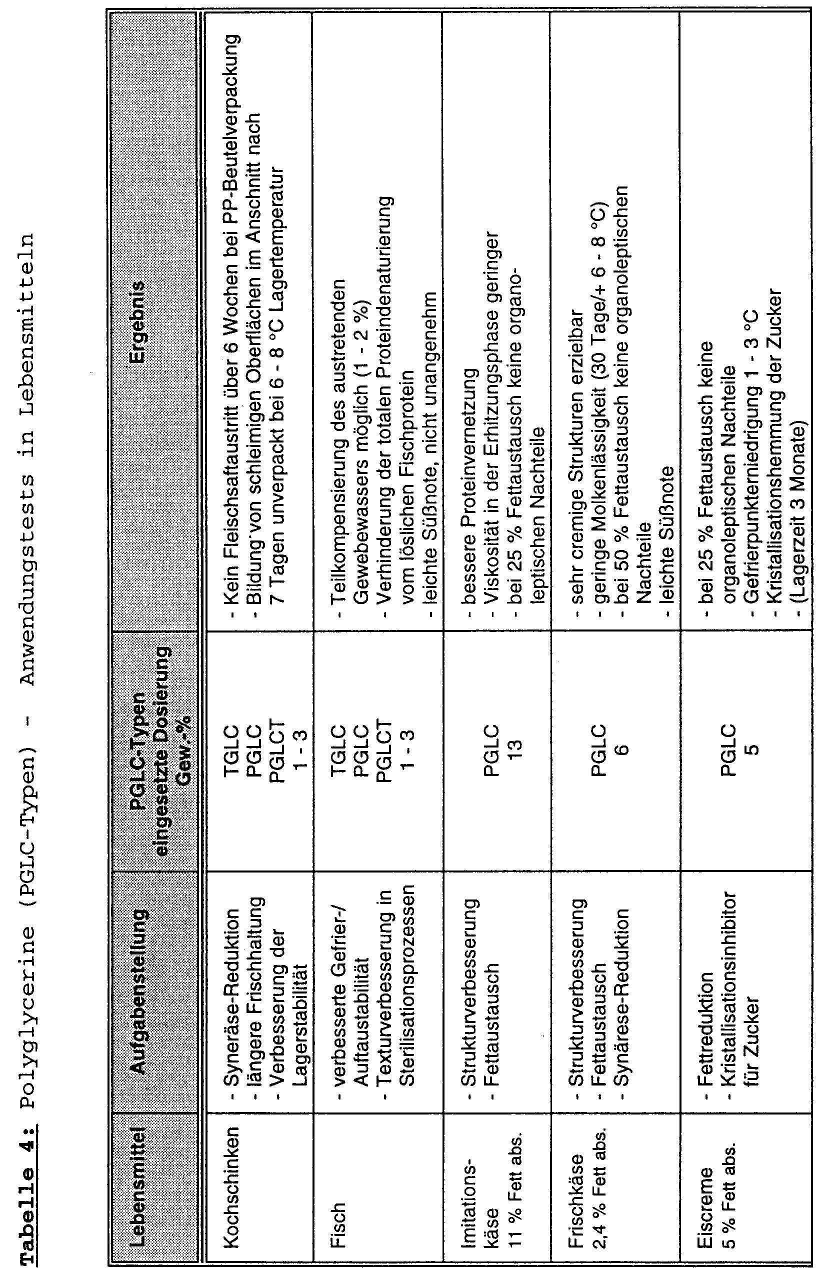

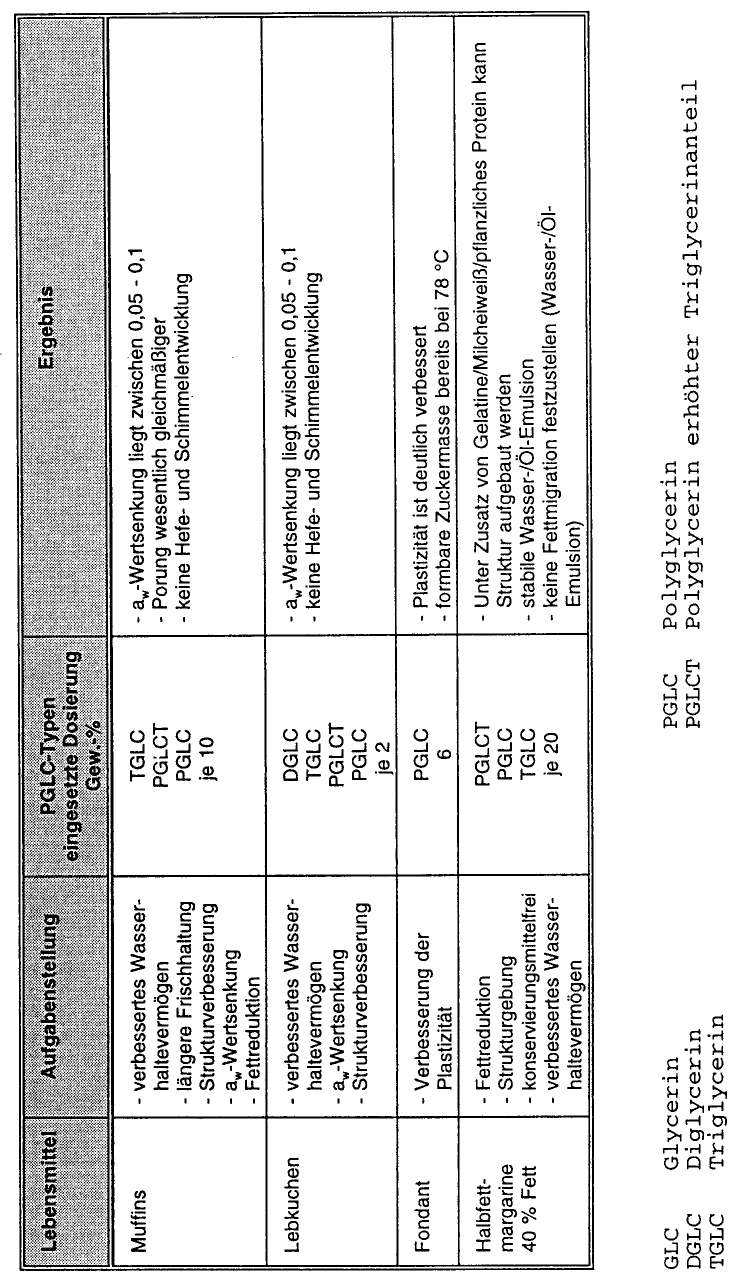

## Patentansprüche

1. Verfahren zur Konfektionierung von Lebensmitteln, dadurch gekennzeichnet, daß ein funktionelles Additiv verwendet wird, das Polyglycerin enthält.

2. Verfahren zur Konfektionierung von Lebensmitteln nach Anspruch 1, dadurch gekennzeichnet, daß lineare und/oder verzweigte und/oder cyclische Polyglycerine verwendet werden.

3. Verfahren zur Konfektionierung von Lebensmitteln nach Anspruch 1 und 2, dadurch gekennzeichnet, daß Polyglycerine in Mengen von 1 bis 50 Gew.-% zugesetzt werden.

4. Verfahren zur Konfektionierung von Lebensmitteln nach Anspruch 1 bis 3, dadurch gekennzeichnet, daß als Polyglycerin im funktionellen Additiv Diglycerin, Triglycerin, Tetraglycerin, Pentaglycerin, Hexaglycerin, höhere Oligomere des Glycerins allein oder deren Gemische enthalten sind.

5. Verfahren zur Konfektionierung von Lebensmitteln, insbesondere von Kochschinken, nach Anspruch 1 bis 4, dadurch gekennzeichnet, daß der Kochschinken mit einer Spritzlake, die Polyglycerin enthält, behandelt wird und nach der Behandlung in der verzehrfähigen Form 1 bis 8 Gew.-% Polyglycerin enthält.

6. Verfahren zur Konfektionierung von Lebensmitteln, insbesondere Fisch, nach Anspruch 1 bis 4, dadurch gekennzeichnet, daß das Fischfleisch mit einer Lake, die Polyglycerin enthält, behandelt wird und nach der Behandlung in der verzehrfähigen Form 0,5 bis 5 Gew.-% Polyglycerin enthält.

7. Verfahren zur Konfektionierung von Lebensmitteln, insbesondere zur Herstellung von Imitationskäse, nach Anspruch 1 bis 4, dadurch gekennzeichnet, daß der Käsemasse 1 bis 15 Gew.-% Polyglycerin, bezogen auf die Käsemasse, zugemischt wird.

8. Verfahren zur Konfektionierung von Lebensmitteln, insbesondere zur Herstellung von Frischkäse, nach Anspruch 1 bis 4, dadurch gekennzeichnet, daß der Käsemasse 1 bis 10 Gew.-% Polyglycerin, bezogen auf die Käsemasse, zugemischt wird.

9. Verfahren zur Konfektionierung von Lebensmitteln, insbesondere zur Herstellung von Speiseeis, nach Anspruch 1 und 4, dadurch gekennzeichnet, daß der Eismischung 1 bis 10 Gew.-% Polyglycerin, bezogen auf die Speiseeismasse, zugemischt wird.

10. Verfahren zur Konfektionierung von Lebensmitteln, insbesondere zur Herstellung von Rührkuchen, z. B. Muffins, nach Anspruch 1 bis 4, dadurch gekennzeichnet, daß dem Teig 2 bis 15 Gew.-% Polyglycerin, bezogen auf die Teigmasse, zugemischt wird.

11. Verfahren zur Konfektionierung von Lebensmitteln, insbesondere zur Herstellung von Lebkuchen, nach Anspruch 1 bis 4, dadurch gekennzeichnet, daß der Kuchenmischung maximal 5 Gew.-% Polyglycerin, bezogen auf die Teigmasse, zugemischt wird.

12. Verfahren zur Konfektionierung von Lebensmitteln, insbesondere von backfähigen Fruchtpasten nach Anspruch 1 bis 4, dadurch gekennzeichnet, daß der Fruchtpaste maximal 5 Gew.-% Polyglycerin, bezogen auf die Fruchtpaste, zugemischt wird.

13. Verfahren zur Konfektionierung von Lebensmitteln, insbesondere zur Herstellung von Fondant, nach Anspruch 1 bis 4, dadurch gekennzeichnet, daß der Fondantmasse 1 bis 6 Gew.-% Polyglycerin, bezogen auf die Fertigmasse, zugemischt wird.

14. Verfahren zur Konfektionierung von Lebensmitteln, insbesondere zur Herstellung von Brotaufstrichen nach Anspruch 1 bis 4, dadurch gekennzeichnet, daß der Mischung maximal 50 Gew.-% Polyglycerin, bezogen auf die Brotaufstrichmasse, zugemischt wird.

15. Verfahren zur Konfektionierung von Lebensmitteln, insbesondere zur Herstellung von Margarine, nach Anspruch 1 bis 4, dadurch gekennzeichnet, daß der Mischung maximal 30 Gew.-% Polyglycerin, bezogen auf die Margarinemischung, zugemischt wird.

16. Verwendung von Polyglycerinen zur Konfektionierung von Lebensmitteln nach Anspruch 1 bis 15, insbesondere zur Beeinflussung der Texturbildung, des Wasserbindungsvermögens, der Frischhaltung, der Kristallisationshemmung, der Proteindenaturierung, der Verbesserung der Gefrier- und Auftaustabilität und zur Fettsubstitution.
